# EUROPEAN PATENT APPLICATION

(11) **EP 4 601 027 A1**
(43) Date of publication of application: **13.08.2025**
(21) Application number: 25154672.7
(22) Date of filing: 29.01.2025
(51) Int. Cl.: H01M 4/133, H01M 4/134, H01M 4/36, H01M 4/38, H01M 4/525

(54) **ANODE FOR LITHIUM SECONDARY BATTERY AND LITHIUM SECONDARY BATTERY INCLUDING THE SAME**

(30) Priority: 07.02.2024 KR 20240018951
(71) Applicant: SK On Co., Ltd., Seoul 03161 (KR)
(72) Inventor: PARK, Sang Won, Daejeon 34124 (KR); KIM, Hyo Mi, Daejeon 34124 (KR); JANG, Hwang Ho, Daejeon 34124 (KR); KWON, Seong Cho, Daejeon 34124 (KR); KIM, Moon Sung, Daejeon 34124 (KR); RYU, Sang Baek, Daejeon 34124 (KR); PARK, Da Hye, Daejeon 34124 (KR); BANG, Sang In, Daejeon 34124 (KR); YOOK, Seung Hyun, Daejeon 34124 (KR); CHUNG, Da Bin, Daejeon 34124 (KR); HAN, Jun Hee, Daejeon 34124 (KR)
(74) Representative: Prüfer & Partner mbB Patentanwälte · Rechtsanwälte

(57) **Abstract**

Disclosed is an anode including an anode current collector, and an anode active material layer which is disposed on at least one surface of the anode current collector and has a multilayer structure comprising a first anode active material layer and a second anode active material layer. At least one of the first anode active material layer and the second anode active material layer includes a first metal-doped first silicon-based active material, and a doping amount of the first metal is 1.5% by weight to 8% by weight based on a total weight of the first silicon-based active material.

## Description

### [BACKGROUND OF THE INVENTION]

### 1. Field of the Invention

The disclosure of the present application relates to an anode for a lithium secondary battery and a lithium secondary battery including the same.

### 2. Description of the Related Art

A secondary battery is a battery that can be repeatedly charged and discharged, and is widely used as a power source for portable electronic communication devices such as a laptop computer and a mobile phone with the development of information and communication and display industries. In addition, recently, a battery pack including the secondary batteries has also been developed and applied as a power source for eco-friendly vehicles such as an electric vehicle.

A cathode material of the lithium secondary battery may include NCM (nickel, cobalt and manganese), NCA (nickel, cobalt and aluminum), LFP (lithium, iron and phosphorus) and the like. An anode material of the lithium secondary battery may include natural graphite, artificial graphite, graphite-based, and metal-based materials, etc.

Among the anode materials, graphite has high stability, and silicon has high energy density.

Recently, as an application range of the lithium secondary batteries has expanded, a need for high energy density, high stability and rapid charging has been increased. For example, batteries used in an electric vehicle require higher capacity than conventional lithium secondary batteries. In order to satisfy the above-described characteristics, use of anode materials in combination has been attempted. However, it is not easy to control a high volume expansion rate of silicon. Thereby, cracks may occur in the active material due to a reaction with lithium during charging/discharging, which may cause a rapid reduction in the lifespan and rapid charging characteristics of the lithium secondary battery.

### [SUMMARY OF THE INVENTION]

An object of the present disclosure is to provide an anode for a secondary battery with improved capacity characteristics and lifespan characteristics.

Another object of the present disclosure is to provide a lithium secondary battery including the anode with improved capacity characteristics and lifespan characteristics.

To achieve the above object, according to an aspect of the present disclosure, there is provided an anode for a lithium secondary battery including: an anode current collector; and an anode active material layer which is disposed on at least one surface of the anode current collector and has a multilayer structure including a first anode active material layer and a second anode active material layer, wherein at least one of the first anode active material layer and the second anode active material layer includes a first metal-doped first silicon-based active material. A doping amount of the first metal is 1.5% by weight to 8% by weight based on a total weight of the first silicon-based active material.

In some embodiments, the first metal may include magnesium.

In some embodiments, the first anode active material layer may include the first silicon-based active material, and the second anode active material layer may include a silicon-based anode active material different from the first silicon-based active material.

In some embodiments, the second anode active material layer may include a second metal-doped second silicon-based active material, and a doping amount of the second metal may be 5% by weight or more based on a total weight of the second silicon-based active material.

In some embodiments, the doping amount of the second metal may be 5% by weight to 20% by weight based on the total weight of the second silicon-based active material.

In some embodiments, the second metal doped to the second silicon-based active material may include at least one selected from the group consisting of Li, Mg, Ca, Al, Fe, Ti and V.

In some embodiments, the silicon-based anode active material included in the second anode active material layer may include a silicon-carbon composite or a metal-undoped SiOx (0<x<2).

In some embodiments, the second anode active material layer does not include a silicon-based active material.

In some embodiments, the first anode active material layer may be in contact with at least one surface of the anode current collector, and the second anode active material layer may be disposed on an upper surface of the first anode active material layer.

In some embodiments, the second anode active material layer may be in contact with at least one surface of the anode current collector, and the first anode active material layer may be disposed on an upper surface of the second anode active material layer.

In some embodiments, the first anode active material layer may be in contact with at least one surface of the anode current collector, and may include the first silicon-based active material, wherein the second anode active material layer may be disposed on an upper surface of the first anode active material layer, and may include a graphite-based active material and may not include a silicon-based active material.

In some embodiments, the first anode active material layer may include the first silicon-based active material, and the second anode active material layer may include the second silicon-based active material, wherein a weight-based content of the first silicon-based active material of a total weight of the first anode active material layer and a weight-based content of the second silicon-based active material of a total weight of the second anode active material layer may be different from each other.

In some embodiments, the first anode active material layer may be in contact with at least one surface of the anode current collector, and the second anode active material layer may be disposed on an upper surface of the first anode active material layer, wherein the weight-based content of the first silicon-based active material of the total weight of the first anode active material layer may be smaller than the weight-based content of the second silicon-based active material of the total weight of the second anode active material layer.

In some embodiments, the first anode active material layer may include the first silicon-based active material and a graphite-based active material, wherein the first anode active material layer may include 2% by weight to 20% by weight of the first silicon-based active material based on the total weight of the first anode active material layer.

In some embodiments, a doping amount of magnesium may be 2% by weight to 5% by weight based on the total weight of the first silicon-based active material.

According to another aspect of the present disclosure, there is provided a lithium secondary battery including: the anode for a lithium secondary battery according to the above-described embodiments; and a cathode disposed to face the anode for the lithium secondary battery.

According to exemplary embodiments of the present disclosure, an occurrence of cracks in the silicon-based active material in the anode may be suppressed, and thus the lifespan characteristics of the lithium secondary battery at room temperature and high temperature may be improved.

In some embodiments, micropores may be included inside the silicon-based active material, and thus an internal energy generated during shrinkage/expansion due to charging/discharging of the secondary battery may be reduced.

In some embodiments, through upper and lower layer structures of the anode active material layers having different compositions, it is possible to increase an energy density of the lithium secondary battery.

### [BRIEF DESCRIPTION OF THE DRAWINGS]

The above and other objects, features and other advantages of the present disclosure will be more clearly understood from the following detailed description taken in conjunction with the accompanying drawings, in which:
FIG. 1 is a schematic cross-sectional view illustrating an anode for a lithium secondary battery according to exemplary embodiments;
FIG. 2 is a schematic cross-sectional view illustrating an anode for a lithium secondary battery according to exemplary embodiments; and
FIGS. 3 and 4 are a schematic plan view and a cross-sectional view illustrating a lithium secondary battery according to exemplary embodiments.

### [DETAILED DESCRIPTION OF THE INVENTION]

According to embodiments of the present disclosure, an anode for a lithium secondary battery, which includes an anode active material layer having a multilayer structure including a first anode active material layer including a first metal-doped first silicon-based active material, and a second anode active material layer, is provided. In addition, a lithium secondary battery including the anode is provided.

As used herein, the term "graphite-based active material" may refer to an active material containing a carbon element, and not containing a silicon element.

As used herein, the term "silicon-based active material" may refer to an active material containing a silicon element.

Hereinafter, the present disclosure will be described in more detail with reference to the drawings and embodiments.

### <Anode for lithium secondary battery>

The anode for a lithium secondary battery according to the embodiments of the present disclosure includes: an anode current collector; and an anode active material layer disposed on at least one surface of the anode current collector.

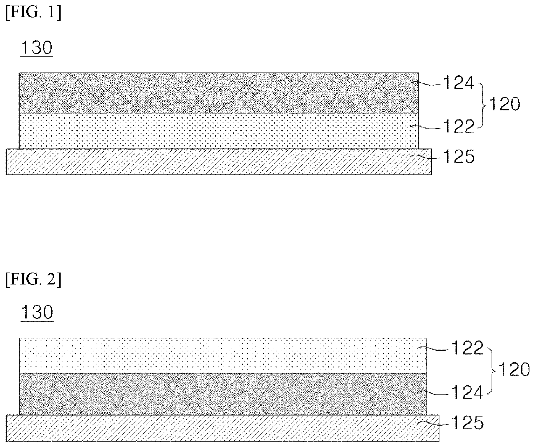

Referring to FIG. 1 or 2, an anode 130 may include an anode current collector 125 and an anode active material layer 120 formed on the anode current collector 125.

For example, the anode current collector 125 may include a metal which has high conductivity, high adhesion with an anode slurry, and does not cause a chemical change in an operating voltage range of the secondary battery. Specifically, the anode current collector 125 may include copper, stainless steel, aluminum, nickel, titanium, or an alloy thereof. Alternatively, the anode current collector 125 may include copper or stainless steel subjected to surface treatment with carbon, nickel, titanium, or silver.

The anode current collector 125 may have a thickness of 3 µm to 500 µm, and may include a structure for increasing adhesion with the anode active material on a surface of the current collector.

In some embodiments, the anode 130 may include the anode active material layer 120 formed on at least one surface of the anode current collector 125, and the anode active material layer 120 may include a first anode active material layer 122 and a second anode active material layer 124.

The first anode active material layer 122 or the second anode active material layer 124 may be in contact with the anode current collector 125 on at least one surface thereof. In addition, a multilayer structure may be formed therein, which includes a layer in contact with at least one surface of the anode current collector and a layer disposed on an upper surface of the layer in contact with the one surface of the anode current collector.

A laminating order of the first anode active material layer 122 and the second anode active material layer 124 is not limited, and for example, the first anode active material layer 122 may be disposed on an upper surface of the anode current collector 125, and the second anode active material layer 124 may be disposed on an upper surface of the first anode active material layer 122. Alternatively, the second anode active material layer 124 may be disposed on the upper surface of the anode current collector 125, and the first anode active material layer 122 may be disposed on an upper surface of the second anode active material layer 124.

In some embodiments, the first anode active material layer 122 may include a first silicon-based active material.

The first silicon-based active material may be doped with a first metal, and the first silicon-based active material doped with the first metal may be formed by mixing, heating, cooling, and pulverizing a silicon-based active material source and a first metal source.

In some embodiments, the first metal may include at least one of Mg, Ca, Al, Fe, Ti and V. In one embodiment, the first metal may include magnesium (Mg).

The silicon-based active material source may be a mixture of silicon (Si) and silicon dioxide (SiO₂). A molar ratio of the silicon and the silicon dioxide may be 1:0.5 to 1.5. The first metal source may include a magnesium source, and the magnesium source may be solid magnesium.

For example, the silicon-based active material source and the first metal source may be mixed to form a first preliminary active material composition.

In the preparation process of the first silicon-based active material, the first metal source may include a magnesium source, and a content of the magnesium source may be 1.5% by weight ("wt%") to 8 wt% based on a total weight of the first preliminary active material composition.

Within the above range, the formation of forsterite in a crystal structure of the doped magnesium may be reduced, such that a crystal size of silicon per unit cell in the active material may be reduced, and a ratio of micropores may be increased.

For example, the first preliminary active material composition may be calcined at a temperature of 1000°C to 1800°C and then cooled, thus a silicon oxide composite including the first metal may be precipitated. The silicon oxide composite including the first metal may be pulverized and classified to form the first silicon-based active material.

In some embodiments, the first silicon-based active material may not include an alloy-based active material. Here, the alloy-based active material may refer to an active material including, for example, silicon and at least one element of an alkali metal, an alkaline earth metal, a group 13 element, a group 14 element, a group 15 element, a group 16 element, a transition metal and a rare earth element, or a combination thereof. When the first silicon-based active material includes the alloy-based active material, the crystal structure of the first silicon-based active material may change.

In some embodiments, the first silicon-based active material may be doped with a first metal in an amount of 1.5 wt% to 8 wt% based on a total weight of the first silicon-based active material.

In some embodiments, the doped first metal may include magnesium.

In one embodiment, the first metal doped to the first silicon-based active material includes magnesium, and a doping amount of the magnesium may be 1.6 wt% to 7 wt%, 1.8 wt% to 6 wt%, or 2 wt% to 5 wt% based on the total weight of the first silicon-based active material.

The magnesium-doped first silicon-based active material may include micropores. Accordingly, an occurrence of cracks during shrinkage/expansion due to charging/discharging of the secondary battery may be suppressed, and the lifespan characteristics of the secondary battery at room temperature and high temperature may be improved.

When the content of magnesium doped to the first silicon-based active material exceeds the above range, the crystal structure of the first silicon-based active material including silicon, oxygen and magnesium may correspond to forsterite (Mg₂SiO₄), thereby forming a dense packing, and a space occupied by silicon per unit cell may be increased, thereby decreasing the ratio of micropores.

For example, if the content of magnesium doped to the first silicon-based active material corresponds to less than 5 wt% based on the total weight of the first silicon-based active material, the forsterite may not be included in the crystal form of the silicon-based active material doped with magnesium. When the magnesium doped to the first silicon-based active material is within the above range, a swelling phenomenon during the shrinkage/expansion process at high temperature (for example, 60°C or higher) may be reduced, thereby improving the lifespan characteristics of the lithium secondary battery.

In some embodiments, the first silicon-based active material may include a graphite-based active material. The graphite-based active material may include natural graphite or artificial graphite. In some embodiments, the first silicon-based active material may include artificial graphite.

In some embodiments, the first anode active material layer may include 2 wt% to 20 wt% of the first silicon-based active material.

In some embodiments, the first anode active material layer may include 3 wt% to 15 wt%, 4 wt% to 15 wt%, or 5 wt% to 10 wt% of the first silicon-based active material.

If the content thereof exceeds the above range, a volume expansion rate of the secondary battery may be increased relative to the increase in the energy density, and if the content thereof is less than the above range, the energy density of the secondary battery may not be increased.

According to some embodiments, when performing XRD analysis on the first silicon-based active material, a peak due to the forsterite (Mg₂SiO₄) may not appear.

In some embodiments, the second anode active material layer 124 may include a silicon-based anode active material different from the first silicon-based active material. In addition, the second anode active material layer 124 may include the graphite-based active material.

For example, the second anode active material layer 124 may include a second silicon-based active material, a silicon-carbon composite, or metal-undoped SiOₓ (0<x<2), which is the second silicon-based anode active material having a different composition from the first silicon-based active material.

In some embodiments, the second anode active material layer 124 may not include the silicon-based active material but may include the graphite-based active material.

In some embodiments, the second anode active material layer 124 may include only one of the second silicon-based active material, the silicon-carbon composite, the metal-undoped SiOx (0<x<2) and the graphite-based active material, or a combination of two or more thereof.

In some embodiments, the second silicon-based active material may be doped with a second metal. The second silicon-based active material doped with the second metal may be formed by mixing, heating, cooling, and pulverizing the silicon-based active material source and a second metal source. The silicon-based active material source may include silicon (Si), or a mixture of silicon (Si) and silicon dioxide (SiO₂). When including the silicon and silicon dioxide, a molar ratio thereof may be 1:0.5 to 1.5.

The second metal that can be doped to the second silicon-based active material may include at least one of Li, Mg, Ca, Al, Fe, Ti and V. The second metal may be the same type of metal as or a different type of metal from the first metal.

In some embodiments, the second metal may include magnesium.

For example, the silicon-based active material source and the second metal source may be mixed to form a second preliminary active material composition.

In the preparation process of the second silicon-based active material, a content of the second metal source may be 5 wt% or more based on the total weight of the second preliminary active material composition. For example, the content of the second metal source may be 5 wt% to 20 wt% based on the total weight of the second preliminary active material composition.

In the preparation process of the second silicon-based active material, the content of the second metal included in the second preliminary active material composition may be different from the content of the first metal included in the first preliminary active material composition in the preparation process of the first silicon-based active material. Accordingly, an anode active material layer having a multilayer structure with different compositions may be formed on an upper portion of the anode current collector. Due to the multilayer structure, a capacity of the secondary battery may be improved.

For example, in the preparation process of the second silicon-based active material, if the second metal content of the second preliminary active material composition is less than the above range, the crystal structure may be similar to that of the first silicon-based active material, thus high-temperature lifespan characteristics of the secondary battery may be decreased. For example, if the second metal content of the second silicon-based active material exceeds the above range, internal cracks in the secondary battery may occur, thus the lifespan characteristics of the secondary battery may be decreased.

For example, the second preliminary active material composition may be calcined at a temperature of 1000°C to 1800°C and then cooled, such that a silicon oxide composite including the second metal may be precipitated. The silicon oxide composite including the second metal may be pulverized and classified to form the second silicon-based active material.

In some embodiments, the second silicon-based active material may be doped with the second metal in an amount of 5 wt% or more based on the total weight of the second silicon-based active material. In one embodiment, the doping amount of the second metal doped to the second silicon-based active material may be 5 wt% to 20 wt%, 6 wt% to 18 wt%, 7 wt% to 18 wt%, or 7.5 wt% to 15 wt% based on the total weight of the second silicon-based active material.

In some embodiments, the metal doped to the second silicon-based active material may include at least one of Li, Mg, Ca, Al, Fe, Ti and V.

In some embodiments, the second silicon-based active material may further include an alloy-based active material. Here, the alloy-based active material may represent an active material including silicon and at least one element of an alkali metal, an alkaline earth metal, a group 13 element, a group 14 element, a group 15 element, a group 16 element, a transition metal and a rare earth element, or a combination thereof.

In some embodiments, the second anode active material layer may include a second silicon-based active material, and may include 5 to 30 wt% of the second silicon-based active material based on the total weight of the second anode active material layer.

In some embodiments, the second anode active material layer may include the second silicon-based active material, and may include 8 wt% to 30 wt%, 10 wt% to 27 wt%, or 10 wt% to 25 wt% of the second silicon-based active material based on the total weight of the second anode active material layer.

In some embodiments, the second anode active material layer may include a silicon-carbon composite or a metal-undoped SiOx (0<x<2).

In some embodiments, the second anode active material layer may not include the silicon-based active material.

In one embodiment, the second anode active material layer may include the graphite-based active material, and may not include the silicon-based active material.

The graphite-based active material included in the second anode active material layer may be natural graphite or artificial graphite.

According to some embodiments, the first silicon-based active material, the second silicon-based active material, or the silicon-carbon composite may further include a carbon coating layer formed on silicon-based active material particles, respectively. Accordingly, it is possible to prevent the silicon-based active material particles from coming into contact with moisture in the air and/or water in the anode slurry. Accordingly, a decrease in the discharge capacity of the secondary battery may be suppressed.

For example, the carbon coating layer may be at least one of amorphous carbon, carbon nanotubes, carbon nanofibers, graphite, graphene, graphene oxide and reduced graphene oxide.

For example, at least one of the first silicon-based active material, the second silicon-based active material, and the silicon-carbon composite may have the carbon coating layer disposed on the outermost portion thereof.

For example, the anode active material layer 120 may be formed by applying an anode active material composition including at least one of the first silicon-based active material, the second silicon-based active material, the metal-undoped SiOx (0<x<2), or the graphite-based active material to the anode current collector 125, followed by drying and pressing the same.

For example, a first anode active material composition including the first metal-doped first silicon-based active material may be applied to the anode current collector, followed by drying and pressing the same, to form the first anode active material layer 122, and a second anode active material composition including a second metal-doped second silicon-based active material may be applied to the first anode active material layer 122, followed by drying and pressing the same, to form the second anode active material layer 124.

One or more of the first silicon-based active material, the second silicon-based active material, the silicon-carbon composite, the metal-undoped SiOx (0<x<2) or the graphite-based active material may be mixed with an anode binder in a solvent to prepare an anode active material composition, and the anode active material composition may optionally further include a conductive agent, a dispersant, a thickener or the like.

As the solvent, an aqueous solvent such as water, pure water, deionized water, distilled water, an aqueous hydrochloric acid solution, an aqueous sodium hydroxide solution, etc.; alcohol solvents such as ethanol, isopropanol, methanol, acetone, n-propanol, t-butanol, etc.; or non-aqueous solvents such as N-methyl-2-pyrrolidone (NMP), dimethylformamide, dimethylacetamide, N,N-dimethylaminopropylamine, ethylene oxide, tetrahydrofuran, etc. may be used.

As the anode binder, a styrene-butadiene rubber (SBR)-based binder, carboxymethyl cellulose (CMC), polyacrylic acid-based binder, poly(3,4-ethylenedioxythiophene, PEDOT)-based binder, and the like may be used.

The conductive material may be included to facilitate electron transfer between the active material particles. For example, the conductive material may include a carbon-based conductive material such as graphite, carbon black, graphene, or carbon nanotubes and/or a metal-based conductive material such as tin, tin oxide, titanium oxide, or a perovskite material such as LaSrCoO₃, and LaSrMnO₃, etc.

As the thickener, carboxymethyl cellulose (CMC) may be used, for example.

In one embodiment, the first anode active material layer 122 may be in contact with at least one surface of the anode current collector 125, and the second anode active material layer 124 may be disposed on the upper surface of the first anode active material layer 122. In addition, in one embodiment, the second anode active material layer 124 may be in contact with at least one surface of the anode current collector 125, and the first anode active material layer 122 may be disposed on the upper surface of the second anode active material layer 124.

In some embodiments, the first anode active material layer 122 may be in contact with at least one surface of the anode current collector and include the above-described first silicon-based active material, and the second anode active material layer 124 may be disposed on the upper surface of the first anode active material layer 122 and include the above-described second silicon-based active material.

In one embodiment, the first anode active material layer 122 may be in contact with at least one surface of the anode current collector 125 and include the first silicon-based active material, and the second anode active material layer 124 may be disposed on the upper surface of the first anode active material layer 122 and include the graphite-based active material, but may not include the silicon-based active material.

In one embodiment, the first anode active material layer 122 may be in contact with at least one surface of the anode current collector 125 and include the first silicon-based active material, and the second anode active material layer 124 may be disposed on the upper surface of the first anode active material layer 122 and include the graphite-based active material and the silicon-based active material.

In one embodiment, the first anode active material layer 122 may be in contact with at least one surface of the anode current collector 125 and include the graphite-based active material but not include the silicon-based active material, and the second anode active material layer 124 may be disposed on the upper surface of the first anode active material layer 122 and include the first silicon-based active material.

In one embodiment, the first anode active material layer 122 and the second anode active material layer 124 may include the first silicon-based active material, respectively, wherein a weight-based content of the first silicon-based active material of a total weight of the first anode active material layer 122 and a weight-based content of the first silicon-based active material of a total weight of the second anode active material layer 124 may be different from each other.

In one embodiment, the first anode active material layer 122 may be in contact with at least one surface of the anode current collector 125, and the second anode active material layer 124 may be disposed on the upper surface of the first anode active material layer 122, wherein the weight-based content of the first silicon-based active material of the total weight of the first anode active material layer 122 may be greater than the weight-based content of the first silicon-based active material of the total weight of the second anode active material layer 124.

In one embodiment, the first anode active material layer 122 may include the first silicon-based active material, and the second anode active material layer 124 may include the second silicon-based active material, wherein the weight-based content of the first silicon-based active material of the total weight of the first anode active material layer 122 and the weight-based content of the second silicon-based active material of the total weight of the second anode active material layer 124 may be different from each other.

In one embodiment, the first anode active material layer 122 may be in contact with at least one surface of the anode current collector 125, and the second anode active material layer 124 may be disposed on the upper surface of the first anode active material layer 122, wherein the weight-based content of the first silicon-based active material of the total weight of the first anode active material layer 122 may be smaller than the weight-based content of the second silicon-based active material of the total weight of the second anode active material layer 124.

For example, the first anode active material layer 122 having a relatively low magnesium content may be arranged on the upper surface of the anode current collector 125. Since the ratio of micropores of the first anode active material layer 122 on the upper surface of the anode current collector 125 is high, an occurrence of the swelling phenomenon inside the secondary battery may be reduced, and the lifespan capacity retention rate of the secondary battery at high temperature may be improved.

In one embodiment, the first anode active material layer 122 and the second anode active material layer 124 may include the first silicon-based active material, respectively. When using the same silicon-based active material, an anode active material having a multilayer structure, in which chemical compositions appear similar to each other, may be formed, and structural stability may be secured.

In one embodiment, the first anode active material layer 122 may include the first silicon-based active material, and the second anode active material layer 124 may include the second silicon-based active material. The weight-based content of the first silicon-based active material layer of the total weight of the first anode active material layer 122 and the weight-based content of the second silicon-based active material of the total weight of the second anode active material layer 124 may be different from each other.

A composition of the anode active material layer 120 may be adjusted depending on a difference in the contents of the silicon-based active materials included in the first anode active material layer 122 and the second anode active material layer 124. The contents of each metal doped to the first silicon-based active material and the second silicon-based active material may be different from each other, and the lifespan characteristics of the lithium secondary battery may be improved depending on the difference in the contents of the doped metals.

In one embodiment, the first anode active material layer 122 may include the first silicon-based active material and the second silicon-based active material, and the second anode active material layer 124 may also include the first silicon-based active material and the second silicon-based active material.

In one embodiment, the second anode active material layer 124 may include the second silicon-based active material, and further include the silicon-carbon composite.

In one embodiment, the first anode active material layer 122 may include the first silicon-based active material and the graphite-based active material, and the first anode active material layer 122 may include 2 wt% to 20 wt% of the first silicon-based active material based on the total weight of the first anode active material layer 122.

In one embodiment, the second anode active material layer 124 may include the second silicon-based active material and the graphite-based active material, and the second anode active material layer 124 may include 5 wt% to 30 wt% of the second silicon-based active material based on the total weight of the second anode active material layer 124.

In one embodiment, one of the first anode active material layer 122 and the second anode active material layer 124 may include one or more of the graphite-based active material; and the silicon-carbon composite or the metal-undoped SiOx (0<x<2).

### <Lithium secondary battery>

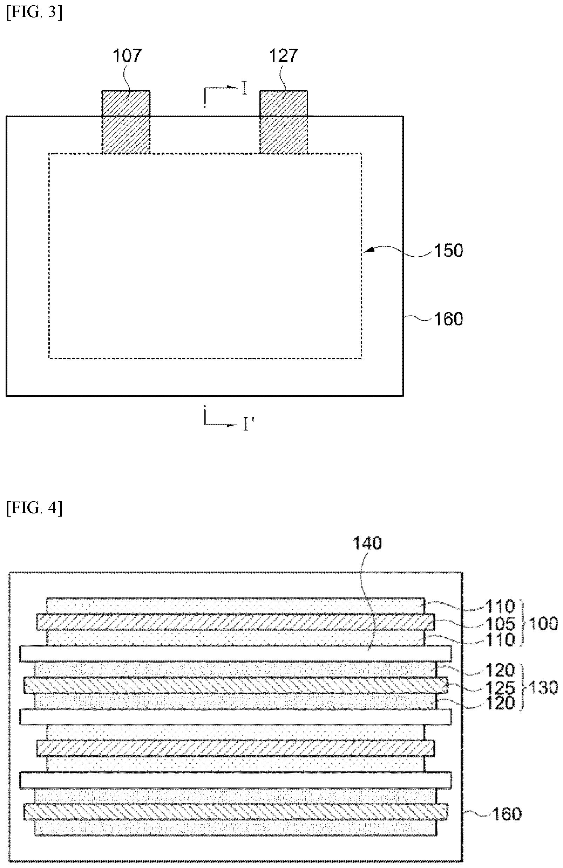

FIGS. 3 and 4 are a schematic plan view and a cross-sectional view illustrating a lithium secondary battery according to exemplary embodiments, respectively. For example, FIG. 4 is a cross-sectional view taken on line I-I' of FIG. 3 in a thickness direction of the lithium secondary battery.

Referring to FIGS. 3 and 4, the lithium secondary battery may include an electrode assembly including a cathode 100 and an anode 130. In some embodiments, the electrode assembly may further include a separation membrane 140 interposed between the cathode and the anode. The electrode assembly may be housed in a case 160 together with an electrolyte to be impregnated.

The cathode current collector 105 may include stainless steel, nickel, aluminum, titanium, or an alloy thereof. The cathode current collector may also include aluminum or stainless steel subjected to surface treatment with carbon, nickel, titanium, or silver.

A cathode active material layer may include a cathode active material. The cathode active material may include a compound capable of reversibly intercalating and deintercalating lithium ions.

According to exemplary embodiments, the cathode active material may include a lithium-nickel metal oxide. The lithium-nickel metal oxide may further include at least one of cobalt (Co), manganese (Mn) and aluminum (Al).

For example, the lithium-nickel oxide may be represented by Formula 1 below.

[Formula 1] LiₓNi_{1-y}M_{y}O_{2+z}

In Formula 1, x, y and z may be in a range of 0.9≤x≤1.2, 0≤y≤0.7, -0.1≤z≤0.1, respectively. M may represent one or more elements selected from Na, Mg, Ca, Y, Ti, Hf, V, Nb, Ta, Cr, Mo, W, Mn, Co, Fe, Cu, Ag, Zn, B, Al, Ga, Sn or Zr.

In some embodiments, a molar ratio or concentration (1-y) of Ni in Formula 1 may be 0.8 or more, for example, may be greater than 0.8.

The chemical structure represented by Formula 1 indicates a bonding relationship between elements included in the layered structure or crystal structure of the cathode active material, and does not exclude other additional elements. For example, M includes Co and/or Mn, and Co and/or Mn may be provided as main active elements of the cathode active material together with Ni. Here, it should be understood that Formula 1 is provided to express the bonding relationship between the main active elements, and is a formula encompassing introduction and substitution of the additional elements.

In one embodiment, the inventive material may further include auxiliary elements which are added to the main active elements, thus to enhance chemical stability of the cathode active material or the layered structure/crystal structure. The auxiliary element may be incorporated into the layered structure/crystal structure together to form a bond, and it should be understood that this case is also included within the chemical structure range represented by Formula 1.

The auxiliary element may include, for example, at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P or Zr. The auxiliary element may act as an auxiliary active element which contributes to the capacity/output activity of the cathode active material together with Co or Mn like Al.

For example, the cathode active material may be dispersed in a solvent to prepare a cathode slurry. The cathode current collector 105 may be coated with the cathode slurry, and then dried and pressed to prepare the cathode 100. The cathode slurry may further include a binder, and optionally further include a conductive material, a thickener or the like.

Non-limiting examples of a solvent used in the preparation of the cathode slurry may include N-methyl-2-pyrrolidone (NMP), dimethylformamide, dimethylacetamide, N,N-dimethylaminopropylamine, ethylene oxide, tetrahydrofuran and the like.

The binder may include polyvinylidene fluoride (PVDF), polyvinylidene fluoride-co-hexafluoropropylene, polyacrylonitrile, polymethylmethacrylate, acrylonitrile butadiene rubber (NBR), polybutadiene rubber (BR), styrene-butadiene rubber (SBR) and the like. In one embodiment, a PVDF-based binder may be used as the cathode binder.

The conductive material may be added to enhance the conductivity of the cathode active material layer and/or the mobility of lithium ions or electrons. For example, the conductive material may include a carbon-based conductive material such as graphite, carbon black, acetylene black, Ketjen black, graphene, carbon nanotubes (CNTs), vapor-grown carbon fibers (VGCFs), carbon fibers, and/or a metal-based conductive material including tin, tin oxide, titanium oxide, or a perovskite material such as LaSrCoO₃, and LaSrMnO₃.

As the thickener, for example, carboxymethyl cellulose (CMC) may be used.

The anode 130 may use an anode including the above-described anode current collector, the first anode active material layer, and the second anode active material layer.

The separation membrane 140 may be interposed between the cathode 100 and the anode 130. The separation membrane may prevent electrical short-circuit between the cathode and the anode, and maintain flow of ions.

The separation membrane 140 may include a porous polymer film or a porous nonwoven fabric. For example, the porous polymer film may include an ethylene homopolymer, a propylene homopolymer, an ethylene/butene copolymer, an ethylene/hexene copolymer, an ethylene/methacrylate copolymer and the like. The porous nonwoven fabric may include glass fiber having a high melting point, polyethylene terephthalate fiber or the like.

The separation membrane 140 may also include a ceramic-based material. For example, inorganic particles may be applied to the polymer film or dispersed within the polymer film to improve heat resistance.

According to exemplary embodiments, an electrode cell is defined by the cathode 100, the anode 130, and the separation membrane 140, and a plurality of electrode cells are stacked to form, for example, a jelly roll type electrode assembly 150. For example, the electrode assembly 150 may be formed by winding, stacking, z-folding, stack-folding, etc. of the separation membrane 140.

In one embodiment, the electrode assembly may be formed by repeatedly laminating the cathode 100, the anode 130 and the separation membrane 140 with the respective layers being cut or separated from each other.

The electrode assembly 150 may be housed in a case 160 together with an electrolyte to define a lithium secondary battery. According to exemplary embodiments, a non-aqueous electrolyte may be used as the electrolyte.

The non-aqueous electrolyte includes a lithium salt of an electrolyte and an organic solvent, the lithium salt is represented by, for example, Li⁺X⁻, and as an anion (X⁻) of the lithium salt, F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻ etc. may be exemplified.

The organic solvent may include an organic compound which has sufficient solubility to the lithium salt and the additive, and does not have reactivity in the battery. As the organic solvent, for example, propylene carbonate (PC), ethylene carbonate (EC), butylene carbonate, diethyl carbonate (DEC), dimethyl carbonate (DMC), ethyl methyl carbonate (EMC), methylpropyl carbonate, ethylpropyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF), 2-methyltetrahydrofuran, ethyl alcohol, isopropyl alcohol, dimethyl sulfur oxide, acetonitrile, dimethoxyethane, diethoxyethane, sulfolane, gamma-butyrolactone, and propylene sulfite, and the like may be used. These may be used alone or in combination of two or more thereof.

The non-aqueous electrolyte may further include an additive. The additive may include, for example, a cyclic carbonate compound, a fluorine-substituted carbonate compound, a sultone compound, a cyclic sulfate compound, a cyclic sulfite compound, a phosphate compound, a borate compound and the like.

The cyclic carbonate compound may include vinylene carbonate (VC), vinyl ethylene carbonate (VEC), etc.

The fluorine-substituted cyclic carbonate compound may include fluoroethylene carbonate (FEC), etc.

The sultone compound may include 1,3-propane sultone, 1,3-propene sultone, 1,4-butane sultone, etc.

The cyclic sulfate compound may include 1,2-ethylene sulfate, 1,2-propylene sulfate, etc.

The cyclic sulfite compound may include ethylene sulfite, butylene sulfite, etc.

The phosphate compound may include lithium difluoro bis-oxalato phosphate, lithium difluoro phosphate, etc.

The borate compound may include lithium bis(oxalate) borate, etc.

In some embodiments, a solid electrolyte may be used instead of the above-described non-aqueous electrolyte. In this case, the lithium secondary battery may be manufactured in the form of an all-solid-state battery. In addition, a solid electrolyte layer may be disposed between the cathode 100 and the anode 130 instead of the above-described separation membrane 140.

The solid electrolyte may include a sulfide-based electrolyte. As a non-limiting example, the sulfide-based electrolyte may include Li₂S-P₂S₅, Li₂S-P₂S₅-LiCl, Li₂S-P₂S₅-LiBr, Li₂S-P₂S₅-LiCl-LiBr, Li₂S-P₂S₅-Li2O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m and n are positive numbers, Z is Ge, Zn or Ga), Li₂S-GeS₂, Li₂S-SiS₂-Li₃PO₄, Li₂S-SiS₂-LiₚMO_{q} (p and q are positive numbers, M is P, Si, Ge, B, Al, Ga or In), Li₇-xPS₆-xClx (0≤x≤2), Li₇-xPS₆-xBrₓ (0≤x≤2), Li₇-xPS₆-xIₓ (0≤x≤2), etc. These may be used alone or in combination of two or more thereof.

In one embodiment, the solid electrolyte may include an oxide-based amorphous solid electrolyte, such as, for example, Li₂O-B₂O₃-P₂O₅, Li₂O-SiO₂, Li₂O-B₂O₃, Li₂O-B₂O₃-ZnO, etc.

The embodiments of the present disclosure described above include the following aspects, and can be implemented through at least one of the following aspects.

According to the first aspect of an anode for a lithium secondary battery, the anode active material includes an anode current collector; and an anode active material layer which is disposed on at least one surface of the anode current collector and has a multilayer structure including a first anode active material layer and a second anode active material layer, wherein at least one of the first anode active material layer and the second anode active material layer includes a first metal-doped first silicon-based active material. A doping amount of the first metal is 1.5% by weight to 8% by weight based on a total weight of the first silicon-based active material.

In the first aspect, according to the second aspect of the anode for a lithium secondary battery, the first metal may include magnesium.

In the first or the second aspect, according to the third aspect of the anode for a lithium secondary battery, the first anode active material layer may include the first silicon-based active material, and the second anode active material layer may include a silicon-based anode active material different from the first silicon-based active material.

In the third aspect, according to the fourth aspect of the anode for a lithium secondary battery, the second anode active material layer may include a second metal-doped second silicon-based active material, and a doping amount of the second metal may be 5% by weight or more based on a total weight of the second silicon-based active material.

In the fourth aspect, according to the fifth aspect of the anode for a lithium secondary battery, the second metal doped to the second silicon-based active material includes at least one selected from the group consisting of Li, Mg, Ca, Al, Fe, Ti and V.

In anyone of the third to the fifth aspect, according to the sixth aspect of the anode for a lithium secondary battery, the silicon-based anode active material included in the second anode active material layer may include a silicon-carbon composite or a metal-undoped SiOx (0<x<2).

In anyone of the first to the sixth aspect, according to the seventh aspect of the anode for a lithium secondary battery, the second anode active material layer does not include a silicon-based active material..

In anyone of the third to the seventh aspect, according to the eighth aspect of the anode for a lithium secondary battery, the first anode active material layer may be in contact with at least one surface of the anode current collector, and the second anode active material layer may be disposed on an upper surface of the first anode active material layer.

In anyone of the third to the eighth aspect, according to the ninth aspect of the anode for a lithium secondary battery, the second anode active material layer may be in contact with at least one surface of the anode current collector, and the first anode active material layer may be disposed on an upper surface of the second anode active material layer.

In anyone of the first to the ninth aspect, according to the tenth aspect of the anode for a lithium secondary battery, the first anode active material layer may be in contact with at least one surface of the anode current collector, and may include the first silicon-based active material, wherein the second anode active material layer may be disposed on an upper surface of the first anode active material layer, and may include a graphite-based active material and may not include a silicon-based active material.

In anyone of the fourth to the tenth aspect, according to the eleventh aspect of the anode for a lithium secondary battery, the first anode active material layer may include the first silicon-based active material, and the second anode active material layer may include the second silicon-based active material, wherein a weight-based content of the first silicon-based active material of a total weight of the first anode active material layer and a weight-based content of the second silicon-based active material of a total weight of the second anode active material layer may be different from each other.

In the eleventh aspect, according to the twelfth aspect of the lithium secondary battery, the first anode active material layer may be in contact with at least one surface of the anode current collector, and the second anode active material layer may be disposed on an upper surface of the first anode active material layer, wherein the weight-based content of the first silicon-based active material of the total weight of the first anode active material layer may be smaller than the weight-based content of the second silicon-based active material of the total weight of the second anode active material layer.

In anyone of the first to the twelfth aspect, according to the thirteenth aspect of the lithium secondary battery, the first anode active material layer may include the first silicon-based active material and a graphite-based active material, wherein the first anode active material layer may include 2% by weight to 20% by weight of the first silicon-based active material based on the total weight of the first anode active material layer.

In anyone of the second to the thirteenth aspect, according to the fourteenth aspect of the lithium secondary battery, a doping amount of magnesium may be 2% by weight to 5% by weight based on the total weight of the first silicon-based active material.

According to the fifteenth aspect of a lithium secondary battery includes the anode active material includes, according to the first aspect to the fourteenth aspect of the anode for a lithium secondary battery; and a cathode disposed to face the anode for the lithium secondary battery.

Hereinafter, experimental examples including specific examples and comparative examples are proposed to facilitate understanding of the present disclosure.

### Example 1

### (1) Preparation of silicon-based active material

### 1) Preparation of silicon-based active material

Magnesium was input in an amount corresponding to 2 wt% based on a total weight of silicon oxide (SiOx, 0<x<2, D50: 6 µm) and magnesium, and mixed with each other to prepare a first silicon-based active material doped with magnesium.

Specifically, silicon (Si), SiO₂, and magnesium were mixed to prepare a powder mixture, provided that these were adjusted so that a sum of silicon and SiO₂ was 98 wt% (molar ratio of silicon and SiO₂, 1:1) and 2 wt% of magnesium, respectively, based on the total weight of the powder mixture. The powder mixture was calcined at a temperature of 1,500°C under reduced pressure, followed by a reaction for 5 hours, and cooled to precipitate a silicon oxide composite including magnesium. The precipitated silicon oxide composite was mechanically pulverized and classified to have an average particle size of 6 µm, thus to prepare a first silicon-based active material (Mg, 2 wt%).

### 2) Preparation of silicon-based active materials with different magnesium contents

A second silicon-based active material (Mg 7.5 wt%) with different magnesium contents was manufactured by the same method as the preparation process of the first silicon-based active material, except that the content was changed to be 7.5 wt% of magnesium and 92.5 wt% of the sum of silicon and SiO₂ (molar ratio, 1:1) based on the total weight of the powder mixture.

### (2) Preparation of anode

A first anode active material composition in the form of a slurry was prepared by mixing 92.825 wt% of artificial graphite (D50: 20 µm) as a graphite-based active material, 5 wt% of the first silicon-based active material, 0.15 wt% of single-walled carbon nanotubes (SWCNTs) as a conductive agent, 0.225 wt% of carbon nanotubes (CNTs) as a dispersant, and 1.8 wt% of CMC/SBR (weight ratio, 1.3:0.5) as a binder.

In addition, a second anode active material composition in the form of a slurry was prepared by mixing 68.2 wt% of artificial graphite as a graphite-based active material, 25 wt% of the second silicon-based active material, 3 wt% of multi-walled carbon nanotubes (MWCNTs) as a graphite-based conductive material, and 3.8 wt% of CMC/SBR (weight ratio, 1.3:2.5) as a binder.

Thereafter, the first anode active material composition and the second anode active material composition were sequentially applied to one surface of a copper foil current collector having a thickness of 8 µm, followed by drying and pressing the same to form a first anode active material layer and a second anode active material layer sequentially on the current collector.

### (3) Manufacture of a lithium secondary battery

A slurry was prepared by mixing 98.08 wt% of Li[Ni_{0.88}Co_{0.1}Mn_{0.02}]O₂ as a cathode active material (66.86 wt% of polycrystalline, 29.42 wt% of single crystal), 0.6 wt% of MWCNTs as a conductive material, 0.12 wt% of CNTs as a dispersant, and 1.2 wt% of polyvinylidene fluoride (PVdF) as a binder. The prepared slurry was uniformly applied to an aluminum foil having a thickness of 12 µm, and was vacuum-dried to prepare a cathode for a lithium secondary battery.

The cathode and the anode were respectively notched in a predetermined size and laminated, then an electrode cell was fabricated by interposing a separator (polyethylene, thickness: 13 µm) between the cathode and the anode. Thereafter, tap parts of the cathode and the anode were welded, respectively. A combination of the welded cathode/separator/anode was put into a pouch, followed by sealing three sides of the pouch except for one side into which an electrolyte is injected. At this time, a portion having the electrode tab was included in the sealing part. After injecting the electrolytic through the remaining one side except for the sealing part, the remaining one side was also sealed, followed by impregnation for 12 hours or more, to manufacture a lithium secondary battery.

The electrolyte used herein was prepared by dissolving 1.1 M LiPF₆ in a mixed solvent of EC/EMC (25/75; volume ratio), and then adding 8 wt% of fluoroethylene carbonate (FEC), 0.5 wt% of 1,3-propene sultone (PRS) and 1.0 wt% of 1,3-propane sultone (PS) thereto.

Thereafter, heat press pre-charging was performed on the lithium secondary battery for 60 minutes at a current corresponding to average 0.5C. After stabilization for 12 hours or more, degassing was performed, and after aging for 24 hours or more, formation charging/discharging was performed (charging condition: CC-CV 0.25C 4.2 V 0.05C CUT-OFF, discharging condition: CC 0.25C 2.5 V CUTOFF).

Thereafter, standard charging/discharging was performed (charging condition: CC-CV 0.33C 4.2 V 0.05C CUT-OFF, discharging condition: CC 0.33C 2.5 V CUT-OFF).

### Example 2

A first silicon-based active material, an anode and a lithium secondary battery were manufactured according to the same procedures as described in Example 1, except that the magnesium content of the second silicon-based active material included in the second anode active material composition was changed to 2 wt%.

### Example 3

A first silicon-based active material, an anode and a lithium secondary battery were manufactured according to the same procedures as described in Example 1, except that the magnesium content of the second silicon-based active material included in the second anode active material composition was changed to 15 wt%.

### Example 4

An anode and a lithium secondary battery were manufactured according to the same procedures as described in Example 1, except that the magnesium content of the second silicon-based active material included in the second anode active material composition was changed to 20 wt%.

### Example 5

An anode and a lithium secondary battery were manufactured according to the same procedures as described in Example 1, except that the magnesium content of the second silicon-based active material included in the second anode active material composition was changed to 25 wt%.

### Example 6

An anode and a lithium secondary battery were manufactured according to the same procedures as described in Example 1, except that the magnesium content of the first silicon-based active material included in the first anode active material composition was changed to 5 wt%, and the content of the second silicon-based active material included in the second anode active material composition was changed to 20 wt%.

### Example 7

An anode and a lithium secondary battery were manufactured according to the same procedures as described in Example 1, except that the magnesium content of the first silicon-based active material included in the first anode active material composition was changed to 7 wt%, and the content of the second silicon-based active material included in the second anode active material composition was changed to 20 wt%.

### Example 8

An anode and a lithium secondary battery were manufactured according to the same procedures as described in Example 1, except that the second anode active material composition did not include the second silicon-based active material, and 93.2 wt% of artificial graphite (D50: 20 µm) was used.

### Example 9

An anode and a lithium secondary battery were manufactured according to the same procedures as described in Example 1, except that the second anode active material composition did not include the second silicon-based active material, and 78.2 wt% of artificial graphite and 15 wt% of silicon/carbon composite (Si/C) were used.

### Comparative Example 1

An anode was prepared according to the same procedures as described in Example 1, except that, when manufacturing the anode, 80.51 wt% of artificial graphite (D50: 20 µm) and 15 wt% of silicon oxide (SiOₓ, 0<x<2, D50: 6 µm) not doped with magnesium were used instead of the first anode active material composition and the second anode active material composition,, and adjust the content of the conductive agent, the dispersant, and the binder, and the anode active material layer was formed in a single layer. At this time, the thickness of the anode active material layer was formed to be the same thickness as a total thickness of the first anode active material layer and the second anode active material layer of Example 1.

### Comparative Example 2

An anode was prepared according to the same procedures as described in Example 1, except that, when manufacturing the anode, the second anode active material composition was omitted, and the anode active material layer was formed in a single layer. At this time, the thickness of the anode active material layer was formed to be the same thickness as the total thickness of the first anode active material layer and the second anode active material layer of

### Example 1.

### Comparative Example 3

An anode was prepared according to the same procedures as described in Example 1, except that, when manufacturing the anode, the second anode active material composition was omitted, the magnesium content of the first silicon-based active material was changed to 15 wt%, and the anode active material layer was formed in a single layer. At this time, the thickness of the anode active material layer was formed to be the same thickness as the total thickness of the first anode active material layer and the second anode active material layer of Example 1.

### Comparative Example 4

A first silicon-based active material, an anode and a lithium secondary battery were manufactured according to the same procedures as described in Example 1, except that the magnesium content of the first silicon-based active material included in the first anode active material composition was changed to 10 wt%.

### Comparative Example 5

A first silicon-based active material, an anode and a lithium secondary battery were manufactured according to the same procedures as described in Example 1, except that the magnesium content of the first silicon-based active material included in the first anode active material composition was changed to 1 wt%.

The magnesium contents and the silicon-based active material contents in the silicon-based active materials according to the examples and comparative examples are as shown in Table 1 below.

**[TABLE 1]**

| Item | First anode active material layer composition | | Second anode active material layer composition | |
|---|---|---|---|---|
| | Magnesium content in silicon-based active material (wt%) | Content of silicon-based active material (wt%) | Magnesium content in silicon-based active material (wt%) | Content of silicon-based active material (wt%) |
| Example 1 | 2 | 5 | 7.5 | 25 |
| Example 2 | 2 | 5 | 2 | 25 |
| Example 3 | 2 | 5 | 15 | 25 |
| Example 4 | 2 | 5 | 20 | 25 |
| Example 5 | 2 | 5 | 25 | 25 |
| Example 6 | 5 | 5 | 7.5 | 20 |
| Example 7 | 7 | 5 | 7.5 | 20 |
| Example 8 | 2 | 5 | - | - |
| Example 9 | 2 | 5 | - | - |
| Comparative Example 1 (single-layer) | - | - | - | - |
| Comparative Example 2 (single-layer) | 2 | 5 | - | -- |
| Comparative Example 3 (single-layer) | 15 | 5 | - | - |
| Comparative Example 4 | 10 | 5 | 7.5 | 25 |
| Comparative Example 5 | 1 | 5 | 7.5 | 25 |

### Experimental Example

### (1) Evaluation of rapid charge lifespan characteristics

The lithium secondary batteries manufactured according to the examples and comparative examples were charged at C-rates of 3.25C/3.0C/2.75C/2.5C/2.25C/2.0C/1.75C/1.5C/1.25C/1.0C/0.75C/0.5C according to the step-charging method to reach DOD72 within 35 minutes, and then discharged at 1/3C. The charging and discharging process was set to be one cycle, and rapid charge lifespan characteristics were evaluated by repeating the cycles. 150 and 300 cycles were performed while having a rest time of 10 minutes between charge and discharge cycles, the rapid charge capacity retention rate was measured, respectively.

### (2) Evaluation of room-temperature (25°C) lifespan characteristics

The lithium secondary batteries manufactured according to the examples and comparative examples were evaluated for general charge lifespan characteristics in the DOD94 (SOC4-98) range while maintaining the temperature at 25°C in a chamber. The batteries were charged at 0.3C to a voltage corresponding to SOC98 under constant current/constant voltage (CC/CV) conditions, and then cut off at 0.05C. Thereafter, the batteries were discharged at 0.3C to a voltage corresponding to SOC4 under constant current (CC) conditions, and the discharge capacity was measured. After repeatedly performing this process for 300 and 600 cycles, the discharge capacity retention rate of room-temperature lifespan characteristic evaluation was measured, respectively.

### (3) Evaluation of high-temperature (45°C) lifespan characteristics

Evaluation of high-temperature lifespan characteristics was performed while the lithium secondary batteries manufactured according to the examples and comparative examples were maintained at 45°C in the chamber. After repeating 300 and 600 cycles under the same conditions as the room-temperature lifespan characteristic evaluation, the discharge capacity retention rate of high-temperature lifespan characteristic evaluation was measured, respectively.

Evaluation results according to the experimental examples are shown in Table 2.

**[TABLE 2]**

| Item | Rapid capacity retention rate (%) | | Room-temperature (25°C) capacity retention rate (%) | | High-temperature (45°C) capacity retention rate (%) | |
|---|---|---|---|---|---|---|
| | 150th cycle | 300th cycle | 300th cycle | 600th cycle | 300th cycle | 600th cycle |
| Example 1 | 94.5 | 91.0 | 95.2 | 92.4 | 89.2 | 82.4 |
| Example 2 | 94.5 | 75.6 | 95.4 | 91.7 | 91.9 | 85.7 |
| Example 3 | 92.3 | 87.0 | 94.5 | 92.2 | 88.7 | 82.2 |
| Example 4 | 91.0 | 80.0 | 93.6 | 89.8 | 90.6 | 83.3 |
| Example 5 | 77.8 | 76.5 | 84.2 | 73.2 | 86.8 | 83.0 |
| Example 6 | 88.0 | 82.3 | 91.1 | 86.2 | 88.8 | 80.5 |
| Example 7 | 83.9 | 78.9 | 88.3 | 83.2 | 84.6 | 76.8 |
| Example 8 | 92.7 | 82.9 | 94.5 | 91.5 | 91.1 | 84.8 |
| Example 9 | 93.6 | 87.5 | 94.7 | 91.0 | 89.6 | 83.2 |
| Comparative Example 1 | 59.5 | Sharply dropped | 93.8 | Sharply dropped | 90.3 | 83.4 |
| Comparative Example 2 | 93.1 | 77.6 | 90.1 | 83.9 | 86.3 | 79.3 |
| Comparative Example 3 | 88.0 | 65.7 | 87.9 | 80.5 | 79.6 | 61.8 |
| Comparative Example 4 | 85.5 | 79.8 | 92.8 | 91.5 | 86.3 | 78.0 |
| Comparative Example 5 | 89.1 | 86.8 | 93.5 | 90.7 | 87.1 | 80.3 |

Referring to Table 2 above, in the case of lithium secondary batteries according to the examples, which include predetermined contents of the first silicon-based active material and anode active material layers in a multiple layer, the capacity retention rate was maintained at a predetermined level or higher even if the number of cycles was increased.

In the case of Example 2, which includes the second silicon-based active material having a magnesium doping amount of 2 wt%, the rapid charge capacity retention rate was decreased with an increase in the number of cycles.

In the case of Example 4, which includes the second silicon-based active material having a magnesium doping amount of 20 wt%, the rapid charge capacity retention rate was relatively reduced with an increase in the number of cycles.

In the case of Example 5, which includes the second silicon-based active material having a magnesium doping amount of 25 wt%, each capacity retention rate was reduced.

In the case of Example 7, which includes the first silicon-based active material with a magnesium doping amount of 7 wt%, the capacity retention rate was relatively reduced.

In the case of Example 8, which does not include the second silicon-based active material and includes the graphite-based active material, the rapid charge capacity retention rate was relatively reduced with an increase in the number of cycles.

In the case of Example 9, which includes the silicon carbon composite (Si/C) instead of the second silicon-based active material containing SiOx, the respective capacity retention rate was similar to that of Example 3.

In the case of the lithium secondary batteries according to Comparative Examples 1 to 3, which include the anode active material layer in a single layer, the rapid charge capacity retention rate, the room-temperature charge capacity retention rate, and the high-temperature charge capacity retention rate were rapidly reduced with an increase in the number of cycles.

In the case of the lithium secondary batteries according to Comparative Example 4 including the first silicon-based active material having a magnesium doping amount of 10 wt% and Comparative Example 5 including the first silicon-based active material having a magnesium doping amount of 1 wt%, the capacity retention rate was generally reduced compared to that of the lithium secondary batteries according to the examples.

### [Description of Reference Numerals]

- 100:: Cathode
- 105:: Cathode current collector
- 107:: Cathode lead
- 110:: Cathode active material layer
- 120:: Anode active material layer
- 122:: First anode active material layer
- 124:: Second anode active material layer
- 125:: Anode current collector
- 127:: Anode lead
- 130:: Anode
- 140:: Separation membrane
- 150:: Electrode assembly
- 160:: Case

## Claims

1. An anode for a lithium secondary battery comprising:
an anode current collector (125); and
an anode active material layer (120) which is disposed on at least one surface of the anode current collector (125) and has a multilayer structure comprising a first anode active material layer (122) and a second anode active material layer (124),
wherein at least one of the first anode active material layer (122) and the second anode active material layer (124) includes a first metal-doped first silicon-based active material, and a doping amount of the first metal is 1.5% by weight to 8% by weight based on a total weight of the first silicon-based active material.

2. The anode for a lithium secondary battery according to claim 1, wherein the first metal includes magnesium.

3. The anode for a lithium secondary battery according to claims 1 or 2, wherein the first anode active material layer (122) includes the first silicon-based active material, and the second anode active material layer (124) includes a silicon-based anode active material different from the first silicon-based active material.

4. The anode for a lithium secondary battery according to anyone of claims 1 to 3, wherein the second anode active material layer (124) includes a second metal-doped second silicon-based active material, and a doping amount of the second metal is 5% by weight or more, or 5% by weight to 20% by weight based on a total weight of the second silicon-based active material.

5. The anode for a lithium secondary battery according to claim 4, wherein the second metal doped to the second silicon-based active material includes at least one selected from the group consisting of Li, Mg, Ca, Al, Fe, Ti and V.

6. The anode for a lithium secondary battery according to anyone of claims 1 to 5, wherein the silicon-based anode active material included in the second anode active material layer (124) includes a silicon-carbon composite or a metal-undoped SiOx (0<x<2).

7. The anode for a lithium secondary battery according to anyone of claims 1 to 6, wherein the second anode active material layer (124) does not include a silicon-based active material.

8. The anode for a lithium secondary battery according to anyone of claims 1 to 7, wherein the first anode active material layer (122) is in contact with at least one surface of the anode current collector (125), and the second anode active material layer (124) is disposed on an upper surface of the first anode active material layer (122).

9. The anode for a lithium secondary battery according to anyone of claims 1 to 8, wherein the second anode active material layer (124) is in contact with at least one surface of the anode current collector (125), and the first anode active material layer (122) is disposed on an upper surface of the second anode active material layer (124).

10. The anode for a lithium secondary battery according to anyone of claims 1 to 9, wherein the first anode active material layer (122) is in contact with at least one surface of the anode current collector (125), and includes the first silicon-based active material,
wherein the second anode active material layer (124) is disposed on an upper surface of the first anode active material layer (122), and includes a graphite-based active material and does not include a silicon-based active material.

11. The anode for a lithium secondary battery according to anyone of claims 4 to 10, wherein the first anode active material layer (122) includes the first silicon-based active material, and the second anode active material layer (124) includes the second silicon-based active material,
wherein a weight-based content of the first silicon-based active material of a total weight of the first anode active material layer (122) and a weight-based content of the second silicon-based active material of a total weight of the second anode active material layer are different from each other.

12. The anode for a lithium secondary battery according to claim 11, wherein the first anode active material layer (122) is in contact with at least one surface of the anode current collector (125), and the second anode active material layer (124) is disposed on an upper surface of the first anode active material layer (122),
wherein the weight-based content of the first silicon-based active material of the total weight of the first anode active material layer (122) is smaller than the weight-based content of the second silicon-based active material of the total weight of the second anode active material layer (124).

13. The anode for a lithium secondary battery according to anyone of claims 1 to 12, wherein the first anode active material layer (122) includes the first silicon-based active material and a graphite-based active material,
wherein the first anode active material layer (122) includes 2% by weight to 20% by weight of the first silicon-based active material based on the total weight of the first anode active material layer (122).

14. The anode for a lithium secondary battery according to anyone of claims 2 to 13, wherein a doping amount of magnesium is 2% by weight to 5% by weight based on the total weight of the first silicon-based active material.

15. A lithium secondary battery comprising:
the anode (130) for a lithium secondary battery according to anyone of claims 1 to 14; and
a cathode (100) disposed to face the anode (130) for the lithium secondary battery.
